# FASCICULE DE BREVET EUROPEEN

(11) **EP 0 439 409 B1**
(45) Date de publication et mention de la délivrance du brevet: **08.06.1994**
(21) Numéro de dépôt: 91400175.5
(22) Date de dépôt: 25.01.1991
(51) Int. Cl.: B62D 53/08, B62D 21/20

(54) **Plateau de remorque ou de semi-remorque muni d'une structure d'attelage de faible épaisseur**
Sattelauflieger mit Königszapfen mit beschränkter Höhe
(Semi)trailer frame with king pin structure of limited height

(30) Priorité: 25.01.1990 FR 9000883
(43) Date de publication de la demande: 31.07.1991
(73) Titulaire: S.E.S.R. - SOCIETE EUROPEENNE DE SEMI-REMORQUES, F-75008 Paris (FR)
(72) Inventeur: Richez, Jacques, F-59553 Cuincy (FR)
(74) Mandataire: Rodhain, Claude

(56) Documents cités:
- CH-A- 419 856
- FR-A- 1 174 817
- US-A- 3 612 569

## Description

La présente invention concerne un plateau de remorque ou de semi-remorque. De tels plateaux (voir US-A-3 612 569) sont habituellement constitués par un assemblage de longerons et de traverses et comportent, à leur partie avant, une cheville ouvrière susceptible de coopérer avec la sellette d'attelage du véhicule tracteur.

Selon l'état de la technique, la cheville ouvrière est supportée par un système de traverses et de longerons thermosoudés entre eux et sur les longerons du plateau. Ce "treillis métallique" supporte une tôle d'attelage portant la cheville ouvrière.

Une telle structure d'attelage ne donne pas entière satisfaction. En effet, l'encombrement en hauteur de l'entrecroisement des longerons et des traverses supportant la cheville ouvrière vient en diminution de la hauteur utile de chargement de la remorque. Or, la hauteur maximale des remorques est limitée par les législations nationales et internationales et en conséquence, la seule possibilité pour augmenter la hauteur utile de chargement consiste à réduire la hauteur des superstructures, et en particulier du plateau.

Par ailleurs, il apparaît comme avantageux d'utiliser une structure de ce plateau qui soit la plus légère possible, en particulier afin de réduire la consommation d'énergie du véhicule tracteur. A cet effet, il est avantageux de remplacer l'acier par de l'aluminium qui outre son poids réduit présente de nombreux avantages dans le domaine de la résistance à la corrosion et de la durée de vie.

La soudure du treillis métallique supportant la cheville ouvrière d'attelage sur les longerons en aluminium a pour effet de fragiliser le plateau. En effet, les contraintes exercées par la structure d'attelage sont relativement importantes et localisées au niveau de ces soudures qui ont pour effet de dégrader les caractéristiques mécaniques des longerons à ces endroits.

Le but de la présente invention est de remédier à ces inconvénients en proposant un plateau selon les caractéristiques de la revendication 1. La hauteur au niveau de la structure d'attelage est réduite.

A cet effet, la cheville ouvrière est solidaire d'une structure pré-assemblée insérée dans l'espace entre les deux longerons latéraux.

Cette structure pré-assemblée est avantageusement constituée par deux rives longitudinales latérales raccordées par des éléments transversaux. De préférence, les éléments transversaux sont constitués par des tôles rigides.

Selon un mode de réalisation particulier, les éléments transversaux sont entretoisés par des longerons de renforcement.

Selon un mode de réalisation préféré, la structure pré-assemblée est solidarisée au châssis par l'intermédiaire de moyens de liaison mécaniques tels que des boulons ou des rivets. Ce mode de réalisation permet d'éviter des chocs thermiques dégradant les caractéristiques mécaniques des longerons du châssis, en particulier lorsque ceux-ci sont constitués par des profilés en aluminium. Ce mode de réalisation permet également d'insérer indifféremment des structures pré-assemblées réalisées en alliage léger ou en acier suivant les besoins.

Selon un mode de réalisation, les rives latérales de la structures pré-assemblée sont solidarisées avec les longerons du plateau.

Avantageusement, la structure pré-assemblée est constituée par un assemblage thermosoudé de deux rives latérales de traverses et de longerines de renfort et d'une tôle d'attelage munie d'une cheville ouvrière raccordée à la partie inférieure de l'assemblage thermosoudé.

Avantageusement les dimensions de rives latérales sont déterminées de façon à ce que la surface extérieure de la tôle d'attelage soit positionnée au niveau, des bords inférieurs des longerons du plateau.

L'invention sera mieux comprise à la lecture de la description qui va suivre, accompagnée des dessins en annexe où :
- La figure 1 représente une vue en coupe transversale d'un plateau de semi-remorque muni de la structure d'attelage.
- La figure 2 représente une vue en coupe longitudinale de la structure d'attelage selon le plan II/II.
- La figure 3 représente une demi vue de dessus de la structure d'attelage selon le plan III/III.

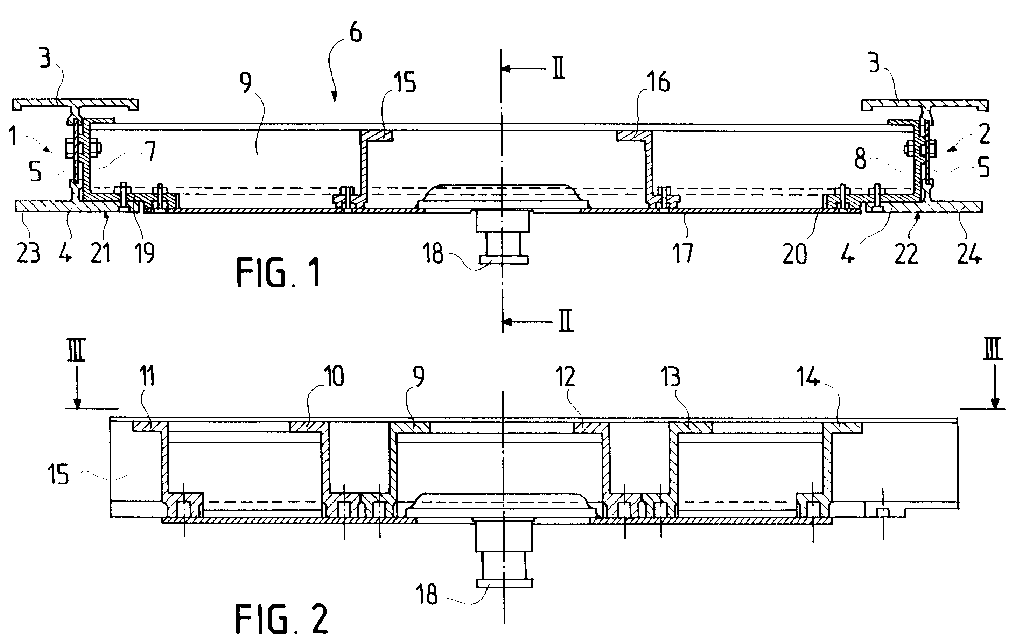

La figure 1 représente une vue en coupe transversale d'un plateau de semi-remorque formé par deux longerons latéraux (1, 2). Ces longerons latéraux sont constitués, de façon connue, par des profilés supérieurs (3) en aluminium, des profilés inférieurs (4) également en aluminium reliés par une âme rigide (5) en aluminium. La liaison entre les profilés (3,4) et l'âme (5) s'effectue par thermosoudage.

La structure pré-assemblée (6) est insérée entre les deux longerons latéraux (1, 2) du plateau. Cette structure pré-assemblée (6) est constituée par deux rives latérales (7, 8) reliées par des traverses de liaison (9 à 14). Perpendiculairement à ces traverses de liaisons (9 à 14) sont disposées des longerines de renfort (15, 16). Une tôle d'attelage (17) est fixée sur les rives latérales (7, 8) sur les longerines de renfort (15, 16), et sur les traverses de liaison. Cette tôle d'attelage (17) supporte la cheville ouvrière (18), qui comporte une partie d'ergots et une partie de plaque de support, ladite plaque de support étant soudée à la tôle d'attelage (17) de façon à ce que la fixation de la cheville ouvrière dans le plateau ne nécessite qu'une hauteur minimum de ce plateau, et permet donc de réaliser un tel plateau avec une dimension verticale qui laisse le maximum pour la hauteur de l'espace de chargement de la semi-remorque qui se trouve au-dessus de ce plateau.

L'assemblage des traverses de liaison (9) à 14), des longerines (15, 16) et des rives latérales (7, 8) s'effectue par des moyens classiques, en particulier par thermosoudage ou boulonnage. La tôle d'attelage (17) est de préférence boulonnée sur la surface inférieure des traverses de liaison et des longerines de renfort (15, 16), comme représenté sur les figures 1 et 2.

Le profil des rives latérales (7, 8), visible en particulier sur la figure 1, correspond sensiblement à un "U", l'extrémité de la branche inférieure (19, 20) des rives respectivement (7, 8) coopérant avec la tôle d'attelage (17) présente une légère sur-épaisseur de façon à ce que la tôle d'attelage (17) soit disposée au même niveau que la face inférieure (21, 22) des longerons latéraux (1, 2), ou déborde légèrement en dessous desdites faces inférieures (21, 22).

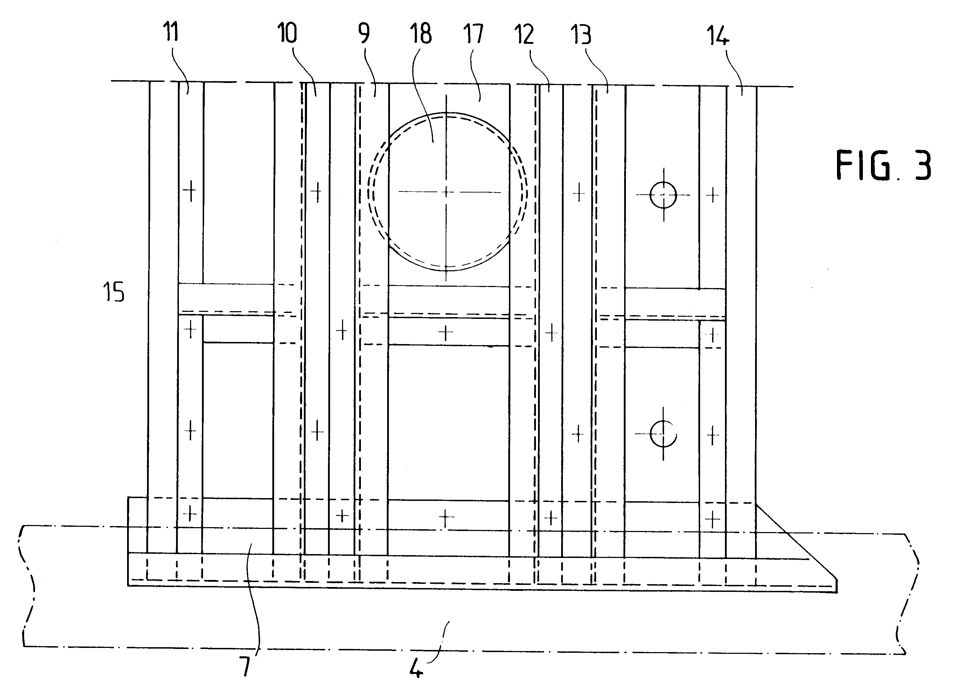

La structure pré-assemblée ainsi constituée est représentée partiellement en vue de dessus sur la figure 3. Elle est formée par un assemblage de rives latérales (7, 8), de traverses de liaisons (9 à 14) et de longerines de renfort supportant la tôle d'attelage (17). Il est bien entendu que la structure pré-assemblée peut être réalisée selon de nombreuses variantes sans pour autant sortir du cadre de la présente invention. Par ailleurs, les différents éléments constituant cette structure pré-assemblée peuvent être choisis parmi de nombreux types de matériaux, en particulier en acier ou en aluminium.

La structure pré-assemblée (6) ainsi constituée est insérée, comme représenté en figure 1, entre les deux longerons latéraux (1, 2) d'un plateau réalisé et monté suivant des techniques connues. La solidarisation de la structure pré-assemblée avec le plateau se fait dans l'exemple décrit par boulonnage des rives latérales (7, 8) sur les longerons latéraux (1, 2) correspondants. Une première série de boulons relie le fond des rives latérales (7, 8) à l'âme (5) des longerons latéraux respectivement (1, 2). Une deuxième série de boulons assemble les branches inférieures (19, 20) des rives latérales respectivement (7, 8) aux ailes (23, 24) des longerons latéraux respectivement (1, 2).

Il est bien évident que la présente invention peut être réalisée selon de nombreuses variantes, toutes à la portée de l'homme de l'art.

## Revendications

1. Plateau de remorque ou de semi-remorque constitué par un assemblage de longerons et de traverses, et comportant à sa partie inférieure une cheville ouvrière (18) susceptible de coopérer avec la sellette d'attelage d'un véhicule tracteur, ladite cheville ouvrière (18) étant solidaire d'une tôle d'attelage (17), caractérisé en ce que ladite tôle d'attelage fait partie d'une structure (6) logée, après pré-assemblage, dans l'espace entre les longerons (1,2) du plateau de remorque, ladite tôle (17) comportant sur ses arêtes latérales, des bords profilés repliés (7,8) épousant en partie la section desdits longerons (1,2).

2. Plateau de remorque selon la revendication 1, caractérisé en ce que les bords profilés sont constitués par des rives (7,8) rendues solidaires des arêtes latérales de la tôle d'attelage (17) par des moyens de liaison mécaniques.

3. Plateau de remorque selon la revendication 2, caractérisé en ce les rives longitudinales latérales (7,8) de la tôle d'attelage sont raccordées entre elles par des éléments transversaux.

4. Plateau de remorque ou de semi-remorque selon l'une des revendications 2 ou 3, caractérisé en ce que les éléments transversaux sont entretoisés par des longerines de renforcement (15,16).

5. Plateau de remorque ou de semi-remorque selon l'une quelconque des revendications 1 à 4, caractérisé en ce que la structure pré-assemblée (6) est solidarisée au châssis par l'intermédiaire de moyens de liaison mécaniques tels que des boulons ou des rivets.

6. Plateau de remorque ou de semi-remorque, selon l'une quelconque des revendications 1 à 5, caractérisé en ce que les rives latérales (7,8) de la structure pré-assemblée (6) sont solidarisées avec les longerons (1,2) latéraux du plateau.

7. Plateau de remorque ou de semi-remorque selon l'une quelconque des revendications précédentes, caractérisé en ce que la structure pré-assemblée est constituée par un assemblage thermosoudé de deux rives latérales (7,8), de traverses de liaison (9 à 14), de longerines de renfort (15,16) ladite tôle d'attelage (17) qui est munie de la cheville ouvrière (18) et raccordée à la partie inférieure dudit assemblage thermosoudé.

8. Plateau de remorque ou de semi-remorque selon la revendication 7, caractérisé en ce que le profil des rives latérales (7,8) sont déterminées de façon à ce que la surface extérieure de la tôle d'attelage (17) soit positionnée au niveau ou au-dessus des bords inférieurs (21,22) des longerons (1,2) du plateau.

9. Plateau de remorque ou de semi-remorque selon l'une des revendications 6 à 8 caractérisé en ce que les longerons comportent deux profilés (3,4) réunis par une âme (5) à laquelle est solidarisée la rive latérales (7,8).

## Patentansprüche

1. Sattelauflieger, gebildet von einem Zusammenbau aus Längsträgern und Querträgern, der an seinem unteren Teil einen Königszapfen (18) aufweist, der dazu geeignet ist, mit der Sattelkupplung einer Zugmaschine zusammenzuwirken, wobei der Königszapfen (18) einstückig mit einem Kupplungsblech (17) ausgebildet ist, dadurch gekennzeichnet, daß das Kupplungsblech Teil eines Gefüges (6) ist, das nach vorherigem Zusammenbau, in dem Raum zwischen den Längsträgern (1, 2) des Sattelaufliegers gelagert wird, wobei das Kupplungsblech (17) auf seinen Seitenkanten umgefalzte profilierte Kanten (7, 8) aufweist, die sich zum Teil dem Abschnitt der Längsträger (1, 2) anpassen.

2. Sattelauflieger gemäß Anspruch 1, dadurch gekennzeichnet, daß die profilierten Kanten von Kanten (7, 8) gebildet sind, die durch mechanische Verbindungseinrichtungen einstückig mit den Seitenkanten des Kupplungsblechs (17) ausgebildet sind.

3. Sattelauflieger gemäß Anspruch 2, dadurch gekennzeichnet, daß die seitlichen Längskanten (7, 8) des Kupplungsblechs miteinander durch Querteile verbunden sind.

4. Sattelauflieger gemäß einem der Ansprüche 2 oder 3, dadurch gekennzeichnet, daß die Querteile durch Verstärkungslängsträger (15, 16) abgesteift sind.

5. Sattelauflieger gemäß irgendeinem der Ansprüche 1 bis 4, dadurch gekennzeichnet, daß das vormontierte Gefüge (6) mittels mechanischer Verbindungseinrichtungen wie Bolzen oder Nieten mit dem Chassis einstückig verbunden ist.

6. Sattelauflieger gemäß irgendeinem der Ansprüche 1 bis 5, dadurch gekennzeichnet, daß die Seitenkanten (7, 8) des vormontierten Gefüges (6) mit den Seitenlängsträgern (1, 2) des Aufliegers einstückig verbunden sind.

7. Sattelauflieger gemäß irgendeinem der vorherigen Ansprüche, dadurch gekennzeichnet, daß das vormontierte Gefüge von einem warmverschweißten Zusammenbau aus zwei Seitenkanten (7, 8), Verbindungsquerträgern (9 bis 14), Verstärkungslängsträgern (15, 16) und dem Kupplungsblech (17) gebildet ist, das mit dem Königszapfen (18) ausgestattet ist und mit dem unteren Teil des warmverschweißten Gefüges verbunden ist.

8. Sattelauflieger gemäß Anspruch 7, dadurch gekennzeichnet, daß das Profil der Seitenkanten (7, 8) derart bestimmt ist, daß die äußere Oberfläche des Kupplungsblechs (17) auf der Höhe oder oberhalb der unteren Kanten (21, 22) der Längsträger des Aufliegers positioniert ist.

9. Sattelauflieger gemäß einem der Ansprüche 6 bis 8, dadurch gekennzeichnet, daß die Längsträger zwei Profile (3, 4) aufweisen, die durch ein Stegblech (5) verbunden sind, mit dem die Seitenkanten (7, 8) einstückig verbunden sind.

## Claims

1. A platform of a trailer or semi-trailer constituted by an assembly of beams and cross-bars, and consisting in its lower part of a king pin (18) capable of co-operating with the attachment seat of a tractive vehicle, the said king pin (18) being integral with a metallic sheet of attachment (17), characterised in that the said attachment sheet forms part of a structure (6) mounted, after pre-assembly, in the space between the longitudinal beams (1, 2) of the trailer platform, the said sheet (17) carrying on its lateral edges turned back extruded borders (7, 8) fitting in part to the section of the said longitudinal beams (1, 2).

2. A trailer platform according to claim 1, characterised in that the profiled borders are constituted by edges (7, 8) rendered integral with lateral rims of the attachment sheet (17) by mechanical connecting means.

3. A trailer platform according to claim 2, characterised in that the lateral longitudinal borders (7, 8) of the attachment sheet are interconnected by transverse elements.

4. A trailer or semi-trailer platform according to either of claims 2 or 3, characterised in that the transverse elements are cross-braced by reinforcing girders (15, 16).

5. A trailer or semi-trailer platform according to any one of claims 1 to 4, characterised in that the pre-assembled structure (6) is connected fast to the chassis by the intermediation of mechanical means such as bolts or rivets.

6. A trailer or semi-trailer platform according to any one of claims 1 to 5, characterised in that the lateral borders (7, 8) of the pre-assembled structure (6) are made integral with the lateral beams (1, 2) of the platform.

7. A trailer or semi-trailer platform according to any one of the preceding claims, characterised in that the pre-assembled structure is constituted by a welded assembly of two lateral borders (7, 8), connecting cross-bars (9 to 14), reinforcement girders (15, 16), the said attachment sheet (17) which is provided with a king pin (18) and connected to the lower part of the said welded assembly.

8. A trailer or semi-trailer platform according to claim 7, characterised in that the profile of the lateral borders (7, 8) is determined in such a manner that the external surface of the sheet of attachment (17) should be positioned at the level or above the lower edges (21, 22) of the beams (1, 2) of the platform.

9. A trailer or semi-trailer platform according to any one of claims 6 to 8, characterised in that the beams carry two extrusions (3, 4) connected by a web (5) to which the lateral borders (7, 8) are rigidly connected.
